Europäisches Patentamt

European Patent Office

Office européen des brevets

(11) Numéro de publication: **0 155 213**
A1

## (12) DEMANDE DE BREVET EUROPEEN

(21) Numéro de dépôt: 85400404.1

(51) Int. Cl.⁴: **G 05 B 19/04**

(22) Date de dépôt: **04.03.85**

(30) Priorité: **15.03.84 FR 8404182**

(71) Demandeur: **MERLIN GERIN, Rue Henri Tarze, F-38050 Grenoble Cedex (FR)**

(43) Date de publication de la demande: **18.09.85 Bulletin 85/38**

(72) Inventeur: **Francon, Claude, Merlin Gerin, F-38050 Grenoble Cedex (FR)**

(84) Etats contractants désignés: **AT BE CH DE GB IT LI NL SE**

(74) Mandataire: **Kern, Paul et al, Merlin Gerin Sce. Brevets 20, rue Henri Tarze, F-38050 Grenoble Cedex (FR)**

(54) **Système informatique à structure multiprocesseur pour la commande et le contrôle d'un procédé.**

(57) Système informatique à structure multiprocesseur de commande d'un actionneur (16) comprenant une unité de commande (UC) associée à une unité de surveillance (US) par une liaison (18). Une interface de sûreté (26) raccordée au bus (28) interne de l'unité de surveillance (US) comporte un circuit logique (30) auquel est injecté un signal logique de commande en provenance de l'unité de commande (UC) ou de l'unité de surveillance (US), et des moyens séquentiels de contrôle de l'état de l'actionneur (16), formés par une mémoire d'état (ME) dont l'écriture et la lecture s'effectuent au moyen du logiciel de l'unité de surveillance (US). En fonction de l'état de l'actionneur (16), la mémoire d'état (ME) applique un ordre de validation ou d'inhibition au circuit logique (30) pour autoriser ou interdire la manœuvre de l'actionneur (16) par l'unité de commande (UC).

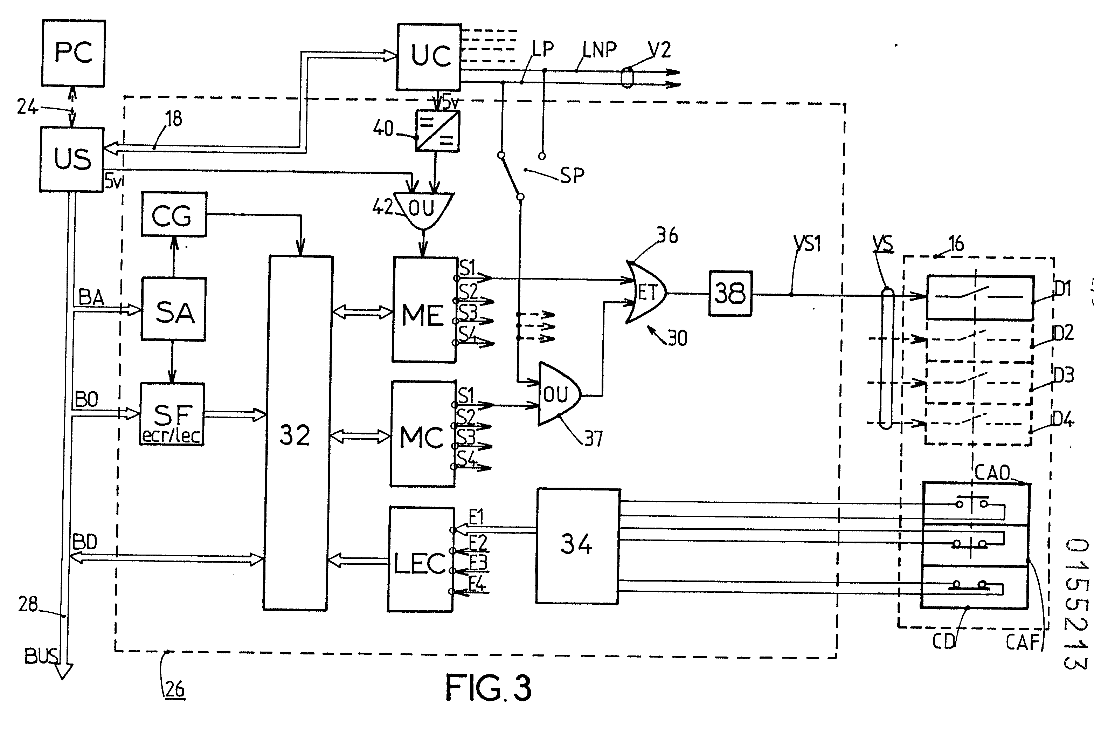

Se référer à la figure 3.

SYSTEME INFORMATIQUE A STRUCTURE MULTIPROCESSEUR POUR LA COMMANDE ET LE CONTROLE D'UN PROCEDE.

L'invention est relative à un système informatique à structure multiprocesseur de commande et de contrôle d'un procédé, comprenant une première unité de commande à microprocesseur, destinée à envoyer des signaux logiques de commande vers au moins un actionneur, une deuxième unité de surveillance à microprocesseur, et une liaison bidirectionnelle de transmission de données autorisant un dialogue réciproque entre les deux unités. Elle s'applique notamment à la commande d'actionneurs bistables comprenant chacun une bobine d'excitation d'un électro-aimant ou d'un relais provoquant un changement d'état de l'actionneur à chaque impulsion d'excitation appliquée à la bobine.

La fonction de l'unité de commande consiste à piloter l'équipement électrique du procédé, c'est-à-dire à envoyer des ordres aux actionneurs dans le but de mettre le procédé dans une configuration permettant d'atteindre l'objectif prédéterminé en matière de disponibilité. L'unité de surveillance sert à diagnostiquer les pannes du système et à réaliser des tests de vérification du bon fonctionnement de l'équipement. Le système informatique peut être connecté à un poste central de surveillance par une liaison bidirectionnelle autorisant une transmission des informations.

Le problème posé par ce genre de système est la modification possible de l'état du procédé en cas de défaillance de l'une des unités. L'émission intempestive d'une impulsion de commande de l'autre unité risque alors en effet de commander une fausse manoeuvre de l'actionneur et un changement d'état de ce dernier. On ne connaît actuellement aucun dispositif de sécurité autorisant de manière simple la commande sûre d'un procédé qui tient compte de l'état initial de l'actionneur au cours de l'apparition d'une défaillance dans l'une des unités du système informatique.

La présente invention a pour but de remédier à ces inconvénients et de permettre la réalisation d'un dispositif de commande sûre et fiable dans lequel la commande du procédé est assurée malgré la panne des fonctions de surveillance, et l'état du procédé n'est pas modifié en cas de panne de son électronique de commande.

L'invention est caractérisée par le fait que le fonctionnement des deux unités de commande et de surveillance est indépendant et que le système comporte de plus une interface de sûreté comprenant un circuit logique combinatoire auquel est injecté un signal logique d'entrée de commande en provenance de la première unité de commande ou de la deuxième unité de surveillance, et des moyens séquentiels de contrôle de l'état de l'actionneur, qui délivrent au circuit logique soit un ordre de validation, soit un ordre d'inhibition pour autoriser ou interdire respectivement la manoeuvre de l'actionneur par l'intermédiaire de l'une des unités de commande ou de surveillance. Il en résulte que les éventuels ordres intempestifs d'origines diverses émis par l'unité de commande ne peuvent pas être appliqués à l'actionneur.

L'interface de sûreté est raccordée au bus interne de la deuxième unité de surveillance. Les moyens séquentiels de contrôle comprennent une mémoire d'état dans laquelle est stockée la valeur binaire représentative de l'état de l'actionneur, l'écriture et la lecture de la mémoire d'état s'effectuant par l'intermédiaire du logiciel de l'unité de surveillance.

Selon une autre caractéristique de l'invention, l'interface de sûreté comporte une mémoire de commande adressable coopérant avec la deuxième unité de surveillance pour injecter dans le circuit logique un signal de commande calibré destiné à actionner un actionneur prédéterminé après validation préalable de la sortie correspondante de la mémoire d'état. Une source auxiliaire ou redondante sert avantageusement à sauvegarder le contenu de la mémoire d'état et à conserver l'alimentation du circuit logique en cas de défaillance de l'une des unités.

Selon une autre caractéristique de l'invention, le circuit logique de l'interface de sûreté comporte une première porte pilotée par le signal de commande calibré de la mémoire de commande et par le signal logique en provenance de l'unité de commande, et une deuxième porte dont l'une des entrées est connectée à la sortie de la première porte et dont l'autre entrée reçoit l'ordre de validation ou d'inhibition de la mémoire d'état.

Chaque actionneur bistable peut être formé par un appareil de coupure fonctionnant en télérupteur. Dans l'état actif, chaque appareil de coupure est normalement fermé par l'intermédiaire de la mémoire de commande de l'unité de surveillance, mais peut être néanmoins délesté et relesté par l'unité de commande grâce à l'ordre de validation délivré par la mémoire d'état au circuit logique. Dans l'état inactif, la mémoire d'état bloque le circuit logique pour interdire toute manoeuvre de l'appareil par l'intermédiaire de l'unité de commande.

Une première application de l'invention est prévue à titre d'exemple pour le contrôle d'un poste de distribution d'énergie électrique à courant alternatif utilisant deux sources d'alimentation en redondance séquentielle, la première source étant le réseau normal et la deuxième source comprenant un groupe électrogène de secours, le passage d'une source à l'autre s'effectuant au moyen d'un permutateur normal/secours logé dans un tableau à basse tension renfermant un jeu de barres de répartition équipé d'une pluralité de départs utilisateurs protégés par des appareils de coupure. Les informations de délestage et de relestage et les demandes d'arrêt et de marche du groupe électrogène circulent dans une liaison bidirectionnelle agencée entre les deux unités de commande pilotant le groupe électrogène et le tableau basse tension des départs utilisateurs.

Une deuxième application de l'invention consiste à répartir les départs utilisateurs en deux groupes en parallèle alimentés par deux tableaux basse tension, renfermant chacun une unité de commande et une unité de surveillance. Le groupe électrogène est piloté par deux unités de commande redondantes reliées chacune par une liaison bidirectionnelle à l'unité de commande correspondante des deux tableaux basse tension. La qualité de service est telle que pour deux départs prioritaires alimentant une structure redondante, l'indisponibilité simultanée des deux départs est inférieure ou égale à $10^{-6}$, c'est-à-dire moins de une heure de panne pour une période de 100 années.

D'autres avantages et caractéristiques ressortiront plus clairement de l'exposé qui va suivre de différents modes de mise en oeuvre de l'invention, donnés à titre d'exemples non limitatifs et représentés aux dessins annexés, dans lesquels :

- la figure 1 montre schématiquement le système informatique de commande et de contrôle d'un procédé dans lequel intervient l'interface de sûreté selon l'invention;

- la figure 2 représente le schéma synoptique de l'interface de sûreté servant à commander une pluralité d'actionneurs;

- la figure 3 est une vue détaillée de l'interface de sûreté de la figure 2, associée à une série de quatre actionneurs;

- la figure 4 représente une première application du système informatique selon l'invention, concernant un poste de distribution d'énergie électrique à courant alternatif utilisant deux sources d'alimentation en redondance séquentielle;

- la figure 5 est une variante de la fig. 4, dans laquelle est installée une redondance des tableaux de distribution;

- la figure 6 montre une vue synoptique d'une unité de commande d'un tableau à basse tension selon la fig. 4 ou 5.

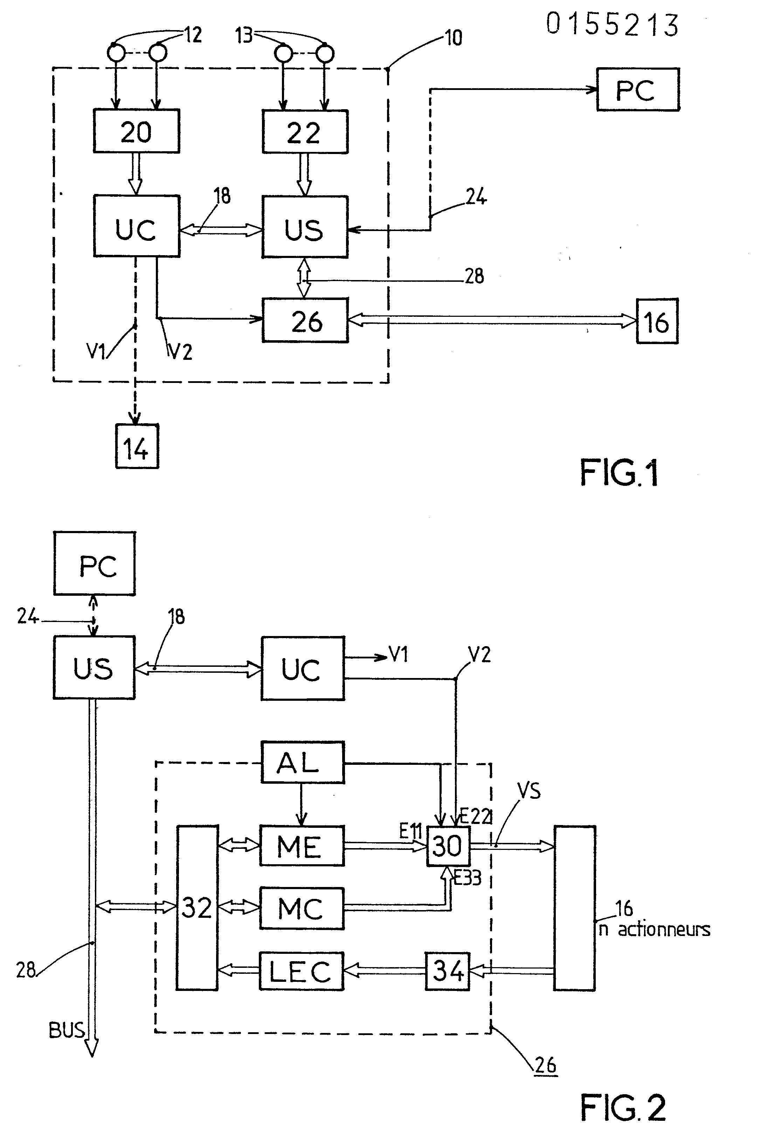

La figure 1 représente schématiquement un système 10 informatique pour le contrôle d'un procédé industriel associé à des capteurs 12, 13 et à des actionneurs 14, 16. Le système 10 présente une structure multiprocesseur comprenant une unité de commande UC couplée avec une unité de surveillance US au moyen d'une première liaison bidirectionnelle 18, notamment une liaison série asynchrone à découplage galvanique. L'unité de commande UC est constituée par un microprocesseur qui reçoît par l'intermédiaire d'une première interface 20 d'entrée, des signaux de mesure en provenance des capteurs 12. L'unité de surveillance US comporte également un microprocesseur qui traite par l'intermédiaire d'une deuxième interface 22 d'entrée les signaux de mesure délivrés par les capteurs 13. Ces signaux de mesure sont généralement des signaux analogiques transformés dans les interfaces d'entrées 20, 22 en valeurs numériques qui sont comparées par les microprocesseurs respectifs à des valeurs de référence ou de consigne enregistrées dans une mémoire correspondante des unités UC et US.

L'unité de surveillance US peut communiquer au moyen d'une deuxième liaison 24 bidirectionnelle avec un poste central PC de contrôle à distance du système 10. Le poste PC centralise toutes les informations du système 10, notamment les consignes d'exploitation qui peuvent être modifiées à tout moment par l'opérateur. La voie de sortie V1 de l'unité de commande UC délivre directement un signal logique de commande au premier actionneur 14, alors que la commande du deuxième actionneur 16 s'effectue par l'intermédiaire d'une interface de sûreté 26 pilotée à la fois par l'unité de commande UC et par l'unité de surveillance US. L'interface de sûreté 26 est agencée pour assurer la continuité de la transmission des ordres de commande de l'unité de surveillance US vers l'actionneur 16 en cas de défaillance de l'unité de commande UC, et alternativement de l'unité de commande UC vers l'actionneur 16 en cas de panne de l'unité de surveillance US. La voie de sortie V2 de l'unité de commande UC est reliée à l'une des entrées

0155213

de l'interface 26, et un bus 28 sert de liaison entre l'unité de surveillance US et l'autre entrée de l'interface de sûreté 26.

La figure 2 représente le schéma synoptique de l'interface de sûreté 26 conforme à l'invention. Cette interface de sûreté 26 sert à commander une pluralité d'actionneurs 16 bistables comprenant chacun une bobine d'un électro-aimant d'un relais de commande (non représenté), qui provoque un changement d'état de l'actionneur à chaque impulsion d'excitation appliquée à la bobine. Chaque actionneur 16 bistable présente :

- un état actif "EN EXPLOITATION" dans lequel on autorise sa manoeuvre par l'unité de commande UC,

- et un état inactif "HORS EXPLOITATION" dans lequel on interdit toute manoeuvre par l'unité de commande UC. L'état de chaque actionneur 16 est affiché dans une mémoire d'état ME de l'interface de sûreté 26 par l'intermédiaire du logiciel de l'unité de surveillance US. La sortie de la mémoire d'état ME est connectée à une première entrée E11 d'un circuit logique 30 combinatoire comprenant une deuxième entrée E22 reliée à la voie de sortie V2 de l'unité de commande UC. Une impulsion de commande en provenance de l'unité de surveillance US peut être appliquée à une troisième entrée E33 du circuit logique 30 par l'intermédiaire d'une mémoire de commande MC. Une interface bus 32 est intercalée entre le bus 28 de l'unité de surveillance US et les entrées des deux mémoires d'état ME et de commande MC. Le circuit logique 30 comporte une pluralité de voies de sorties VS qui transmettent les ordres de commande aux différents actionneurs 16, chaque voie étant associée à une bobine d'un actionneur prédéterminé. Des moyens séquentiels de vérification comprenant un registre de lecture LEC coopérant avec l'interface bus 32 autorisent la relecture par l'unité de surveillance US d'informations en provenance des actionneurs 16. Ces informations sont délivrées par des auxiliaires électriques (non représentés), notamment des contacts ou autres détecteurs de signalisa-

7

tion de l'état des actionneurs 16, puis appliquées au registre de lecture LEC par l'intermédiaire d'un circuit d'isolement et de filtrage 34.

Une source auxiliaire d'alimentation AL autonome ou redondante alimente directement la mémoire d'état ME et le circuit logique 30 de commande des actionneurs 16. En cas de défaillance de l'une quelconque des unités de commande UC et de surveillance US, la source AL permet de sauvegarder le contenu de la mémoire d'état ME et de conserver l'alimentation du circuit logique 30.

La mémoire d'état ME mémorise  n  bits ou valeurs binaires 1 ou 0 correspondant chacune à l'état des  n  actionneurs 16. Le bit 1 correspond par exemple à l'état actif "EN EXPL." d'un actionneur 16, tandis que le bit 0 correspond à l'état inactif "HORS EXPL.". La présence du bit 1 à une adresse prédéterminée de la mémoire d'état ME envoie un ordre de validation à l'entrée E11 du circuit logique 30 et autorise la manoeuvre de l'actionneur 16 adressé, l'ordre de commande pouvant venir soit de l'unité de commande UC par la voie V2, soit de l'unité de surveillance US par l'intermédiaire de la mémoire de commande MC. La présence du bit 0 à une adresse prédéterminée de la mémoire d'état ME engendre un ordre d'inhibition vers le circuit logique 30, et condamne la manoeuvre de l'actionneur 16 correspondant. Le fonctionnement précis du dispositif de la fig. 2 sera mieux compris par la suite à l'aide du schéma détaillé de la figure 3.

Selon la figure 3, l'interface de sûreté 26 commande une série de quatre actionneurs 16 formés à titre d'exemple par des appareils de coupure de courant télécommandés D1, D2, D3, D4, insérés dans les départs d'un réseau de distribution basse tension. La structure du mécanisme d'un tel appareil de coupure est décrite en détail dans la demande de brevet français N° 82 18551 du 3-11-1982 de la demanderesse, le mécanisme autorisant une commande à distance de fermeture et/ou d'ouverture, et une commande locale de déclenchement sur défaut. Le circuit électronique d'alimentation de l'appareil de coupure susmentionné fait l'objet de la demande de brevet français N° 82 20111 du 29-11-1982 de la demanderesse.

A chaque appareil de coupure D1, D2, D3, D4 est associé un système de contacts auxiliaires CAO d'ouverture, CAF de fermeture et CD de défaut, destiné à signaler l'état de l'appareil au registre de lecture LEC. Certains départs du réseau sont prioritaires et les autres départs sont non prioritaires, et les quatre appareils D1, D2, D3, D4 appartiennent à une série de même priorité. La voie de sortie V2 de l'unité de commande UC est composée à cet effet d'une ligne prioritaire LP et d'une ligne non priorité LNP destinées chacune à envoyer des ordres de commande, notamment de délestage et de relestage à une même série d'appareils. Un sélect eur de priorité SP permet de choisir le type de priorité pour une interface de sûreté 26 prédéterminée. Dans l'exemple de la figure 3, le sélecteur SP est commuté sur la ligne prioritaire LP de l'unité de commande UC, et l'interface 26 assure la commande des quatre appareils D1, D2, D3, D4 d'une même série de lestage associée à quatre départs prioritaires. La carte de l'interface de sûreté 26 peut bien entendu commander un nombre différent d'appareils de coupure selon la structure du réseau. La voie de sortie V2 de l'unité de commande UC peut également comporter une pluralité de lignes à degré de priorité variable; le nombre de plots du sélecteur de priorité SP correspond alors au nombre de lignes de la voie V2. Les deux mémoires d'état ME et de commande MC sont des mémoires adressables.

Le bus 28 de l'unité de surveillance US communique avec l'interface bus 32 au moyen d'un bus données BD, et avec un sélecteur d'adresse SA de la carte et avec un sélecteur de fonction SF d'écriture et de lecture respectivement par des bus d'adresse BA et d'ordre BO. Le sélecteur d'adresse SA coopère avec un chien de garde CG dont l'intervention sert à bloquer dans l'interface 32 la fonction d'écriture en provenance du microprocesseur de l'unité de surveillance US. Il en résulte alors un blocage simultané d'écriture de la mémoire d'état ME et de la mémoire de commande MC pour éviter toute émission intempestive d'ordres en direction des appareils D1 à D4.

Chaque appareil de coupure D1, D2, D3, D4 est bistable et fonctionne en télérupteur, c'est-à-dire que chaque impulsion d'excitation appliquée à sa bobine de commande par le circuit logique 30 provoque un changement d'état du contact mobile, entraîné soit en position stable de fermeture, soit en position stable d'ouverture. Lorsqu'un appareil de coupure D1 à D4 se trouve dans l'état inactif "HORS EXPL.", son contact correspondant est verrouillé par l'interface 26 en position ouvert, étant donné que son état (bit 0) est inscrit dans la mémoire d'état ME ce qui interdit toute manoeuvre par l'unité de commande UC. Dans l'état actif "EN EXPL.", chaque appareil de coupure D1 à D4 est normalement fermé par l'intermédiaire de l'unité de surveillance US, mais peut néanmoins être délesté et relesté par l'unité de commande UC grâce à la validation confirmée par la mémoire d'état ME chargée par le bit 1 à l'adresse correspondante.

Pour des raisons de clarté du dessin de la figure 3, seule la commande de l'appareil de coupure D1 a été représentée. La voie de sortie VS1 du circuit logique 30 est en fait reliée au moyen de commande K du circuit décrit dans la demande de brevet français N° 82 20111 précitée.

La mémoire d'état ME mémorise quatre bits correspondant chacun à l'état (actif ou inactif) des quatre appareils de coupure D1 à D4. La sortie S1 de la mémoire d'état ME est affectée à l'état de l'appareil D1 et est connectée à une première entrée d'une porte ET 36 du circuit logique 30. L'autre entrée de la porte ET 36 est pilotée par une porte OU 37 pouvant être commandée par deux impulsions en provenance de l'unité de commande UC et de l'unité de surveillance US. L'impulsion de cette dernière est délivrée par la sortie S1 de la mémoire de commande MC. Un circuit adaptateur 38 est interconnecté entre la sortie de la porte ET 36 et l'appareil de coupure D1. La sortie S1 de la mémoire d'état ME applique à la porte ET 36 un ordre de validation (bit 1) ou un ordre d'inhibition (bit 0) selon l'état "EN EXPL." ou "HORS EXPL." de l'appareil de coupure D1.

La source d'alimentation de la mémoire d'état ME et du circuit logique 30 est double et résulte de l'alimentation commune à l'unité de surveillance US et à l'unité de commande UC. Un convertisseur 40 continu/continu isole galvaniquement la tension de 5V de l'unité de commande UC par rapport à l'une des entrées d'une porte OU 42, dont l'autre entrée est reliée à la tension de 5 V de l'unité de surveillance US. La sortie de la porte OU 42 sert à alimenter la mémoire d'état ME et le circuit logique 30. L'alimentation est ainsi conservée en cas de panne de l'une des unités UC ou US, et l'état des appareils D1 à D4 est sauvegardé.

Le microprocesseur utilisé dans l'unité de surveillance US est le 68000 de MOTOROLA, et celui de l'unité de commande UC est le 68705 de MOTOROLA.

Le fonctionnement du dispositif représenté à la figure 3 est le suivant :

1) Fermeture de l'appareil de coupure D1 par l'unité de surveillance US.

En partant de la position initiale OUVERT de l'appareil de coupure D1, la mémoire d'état ME doit être chargée par le bit 1 correspondant à l'état actif "EN EXPL." de l'appareil D1. Ce processus de chargement de la mémoire d'état ME est piloté par le logiciel de l'unité de surveillance US :

- apparition en écriture (ECR) de l'adresse de la carte et l'adresse de la mémoire d'état ME (sortie S1) sur le bus adresse BA,

- apparition du bit 1 sur le bus de données BD

- apparition de l'ordre d'écriture (ECR) sur le bus d'ordre BO qui permet de charger la mémoire d'état ME, dont la sortie S1 applique un ordre de validation à la porte ET 36.

A partir de cet instant intervient l'émission de l'ordre de fermeture par la sortie S1 de la mémoire de commande MC, cette dernière étant sélectionnée en écriture d'une manière similaire à celle décrite ci-dessus pour le processus de chargement de la mémoire d'état ME. Le bit 1 est gravé dans la mémoire de commande MC pendant une durée prédéterminée (par exemple 50 ms) et il en résulte une impulsion calibrée qui traverse la porte OU 37 et la porte ET 36 de manière à actionner l'appareil D1. Ce dernier change d'état et se ferme.

La position réelle de l'appareil D1 peut être vérifiée au moyen du registre de lecture LEC dont l'entrée E1 est en liaison avec les contacts auxiliaires CAO et CAF de l'appareil D1. L'accès au registre de lecture LEC s'opère au moyen de l'unité de surveillance US :

- affichage de l'adresse du registre LEC (entrée E1) sur le bus adresse BA,

- émission de l'ordre de LECTURE sur le bus ordre BO,

- apparition sur le bus données BD des états des contacts auxiliaires CAO, CAF.

La fermeture des autres appareils D2, D3, D4 s'effectue d'une manière similaire à celle de D1 en utilisant les sorties S2, S3, S4 des mémoires d'état ME et de commande MC.

2) OUVERTURE de l'appareil de coupure D1 par l'unité de surveillance US (fig. 3).

La procédure est absolument identique puisque l'appareil D1 fonctionne en télérupteur. Après émission de l'impulsion calibrée par la sortie S1 de la mémoire de commande MC, l'appareil D1 s'ouvre. L'unité de surveillance US charge ensuite le bit O dans la mémoire d'état ME, ce qui correspond à l'état inactif "HORS EXPL. de l'appareil D1. La sortie S1 de la mémoire d'état ME applique ensuite un ordre d'inhibition à la porte ET 36, ce qui interdit toute commande ultérieure de D1 en provenance de l'unité de commande UC. D1 se trouve ainsi verrouillé en position ouvert.

3) OUVERTURE des appareils de coupure D1 à D4 par l'unité de commande UC (fig. 3).

L'état des appareils de coupure D1 à D4 associés à l'interface de sûreté 26 est affiché initialement dans la mémoire d'état ME par l'unité de surveillance US.

Le signal de commande d'ouverture (délestage) délivré par la ligne LP de l'unité de commande UC est appliqué à la porte OU 37 associée à chaque appareil de coupure D1, D2, D3, D4. La porte ET 36 correspondante du circuit logique 30 assure le blocage ou le passage du signal de commande en provenance de l'unité de commande UC selon l'état de la sortie S1 à S4 correspondante de la mémoire d'état ME. A titre d'exemple, si les sorties S1 et S3 de la mémoire d'état ME se trouvent au niveau 1 correspondant à l'état "EN EXPL." des appareils D1 et D3, alors que les deux sorties S2 et S4 sont à un niveau O correspondant à un état "HORS EXPL." des appareils D2 et D4, le circuit logique 30 ne laissera passer que les deux signaux de commande en direction des appareils D1 et D3. Les quatre portes ET 36 du circuit logique 30 reçoivent deux ordres de validation

13

0155213

des sorties S1 et S3 et deux ordres d'inhibition des deux autres sorties S2 et S4 de la mémoire d'état ME.

4) FERMETURE des appareils de coupure D1 à D4 par l'unité de commande UC (fig. 3).

Le fonctionnement est similaire à celui décrit précédemment. Le circuit logique 30 laisse passer ou bloque le signal de commande de fermeture (relestage) en provenance de l'unité de commande UC selon le niveau (bit 1 = validation, bit 0 = inhibition) des sorties S1 à S4 de la mémoire d'état ME.

La présence de cette mémoire d'état ME pilotée par l'unité de surveillance US, permet d'éviter des fermetures intempestives des appareils D1 à D4 lors des manoeuvres de délestage et de relestage. Le contenu de la mémoire d'état ME peut être lu par l'unité de surveillance US lors d'une procédure de contrôle. On remarque que la manoeuvre des appareils de coupure D1 à D4 par l'unité de commande UC est tributaire de leurs états affichés dans la mémoire d'état ME par l'unité de surveillance US. La manoeuvre est autorisée lorsque l'appareil se trouve dans l'état "EN EXPL.". Si l'appareil est dans l'état "NON EXPL.", on interdit toute manoeuvre par l'unité de commande UC. En cas de panne de l'unité de surveillance US, le contenu de la mémoire d'état ME est sauvegardé, et les appareils D1 à D4 dans l'état "EN EXPL." peuvent être manoeuvrés par l'unité de commande UC.

En cas de panne de l'unité de commande UC, chaque appareil D1 à D4 peut être manoeuvré individuellement par l'unité de surveillance US.

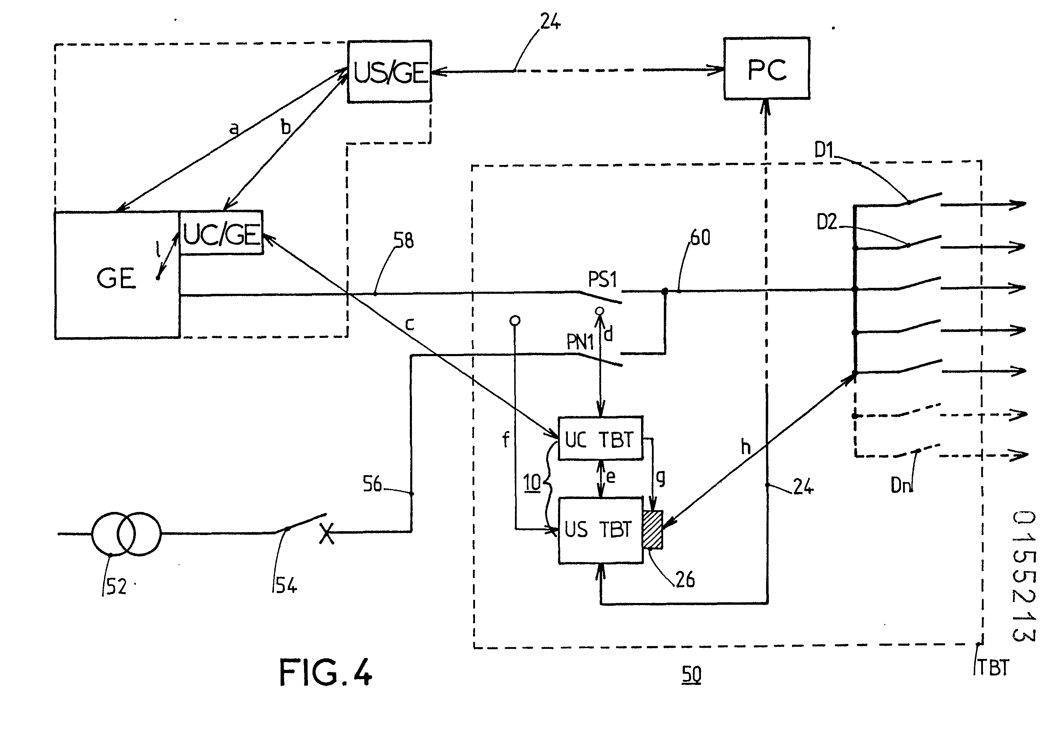

La figure 4 représente une première application du système informatique 10 décrit aux figures 1 à 3. Elle concerne un poste de distribution 50 d'énergie électrique à courant alternatif monophasé ou triphasé utilisant deux sources

0155213

d'alimentation en redondance séquentielle :

- le réseau normal d'alimentation du poste par l'intermédiaire d'un transformateur MT/BT 52 et d'un disjoncteur 54 de protection;

- et un groupe électrogène GE de secours comprenant un alternateur entraîné par un moteur à combustion interne.

Le disjoncteur 54 et la sortie de l'alternateur du groupe GE sont reliés respectivement par des conducteurs 56, 58 à un permutateur PN1, PS1 ou inverseur normal/secours en liaison avec un jeu de barres 60 de répartition, ce dernier étant équipé d'une pluralité de départs utilisateurs protégés et commandés par des appareils de coupure D1 à Dn du type décrit à la fig. 3. On distingue des départs prioritaires, semi-prioritaires et non prioritaires.

Le permutateur PN1, PS1 normal/secours et les appareils de coupure D1 à Dn sont logés dans un tableau basse tension TBT piloté par un système informatique 10 comprenant une unité de commande UC/TBT et une unité de surveillance US/TBT équipée d'une interface de sûreté 26 décrit en référence à la fig. 3. L'unité de commande UC comprend une première sortie qui contrôle directement le permutateur PN1, PS1, et une deuxième sortie, assimilable à la voie V2 de la fig. 3, qui pilote la manoeuvre des appareils D1 à Dn par l'intermédiaire d'une ou de plusieurs interfaces de sûreté 26. Le tableau TBT renferme également les capteurs nécessaires à la surveillance et au comptage d'énergie.

Le groupe électrogène GE de secours est installé dans un tableau TGE qui renferme de plus les protections de l'alternateur, les actionneurs et les capteurs des équipements électriques et électroniques, une unité de commande UC/GE et une unité de surveillance US/GE. Le groupe GE et son environnement électronique du tableau TGE sont totalement autonomes.

0155213

Différentes liaisons relient entre eux les différents éléments des procédés :

Tableau TGE

- liaison a bidirectionnelle entre l'unité de surveillance US/GE et le groupe GE;

- liaison l bidirectionnelle entre l'unite de commande UC/GE et le groupe GE;

- liaison b bidirectionnelle transmettant les informations des capteurs servant à la commande du groupe GE vers l'unité de surveillance US/GE, ainsi que les états internes et les résultats de tests de l'unité de commande UC/GE. En retour elles transmettent les ordres d'exploitation en provenance de l'unité de surveillance US/GE;

- liaison c bidirectionnelle pour l'échange d'informations entre les deux unités de commande UC/GE et UC/TBT. Dans le sens GE vers TBT circulent les informations de délestage et de relestage du groupe GE. Dans le sens TBT vers GE circulent les demandes d'arrêt et de marche du groupe GE.

Tableau TBT

- liaison d bidirectionnelle pour la mesure des tensions sur le jeu de barres 60 et la commande des bobines du permutateur PS1, PN1.

- liaison e bidirectionnelle pour l'échange d'informations entre les unités de commande UC/TBT et de surveillance US/TBT (consignes d'exploitation dans le sens US/TBT vers UC/TBT et états internes et comptes-rendus d'auto-tests dans le sens UC/TBT vers US/TBT).

- liaison f unidirectionnelle concernant les informations nécessaires au comptage d'énergie et à la surveillance du jeu de barres 60.

- liaison g (assimilable à la voie V2 de la fig. 3) entre l'unité de commande UC/TBT et l'interface de commande 26 pour piloter les lestages et délestages des appareils D1 à Dn.

- liaison h bidirectionnelle reliant tous les appareils D1 à Dn à l'interface 26 de l'unité de surveillance US/TBT.

- liaison 24 série synchrone bidirectionnelle reliant chaque unité de surveillance US/TBT, US/GE au poste central PC. Sur ces lignes circulent les messages d'exploitation et les messages d'alarme.

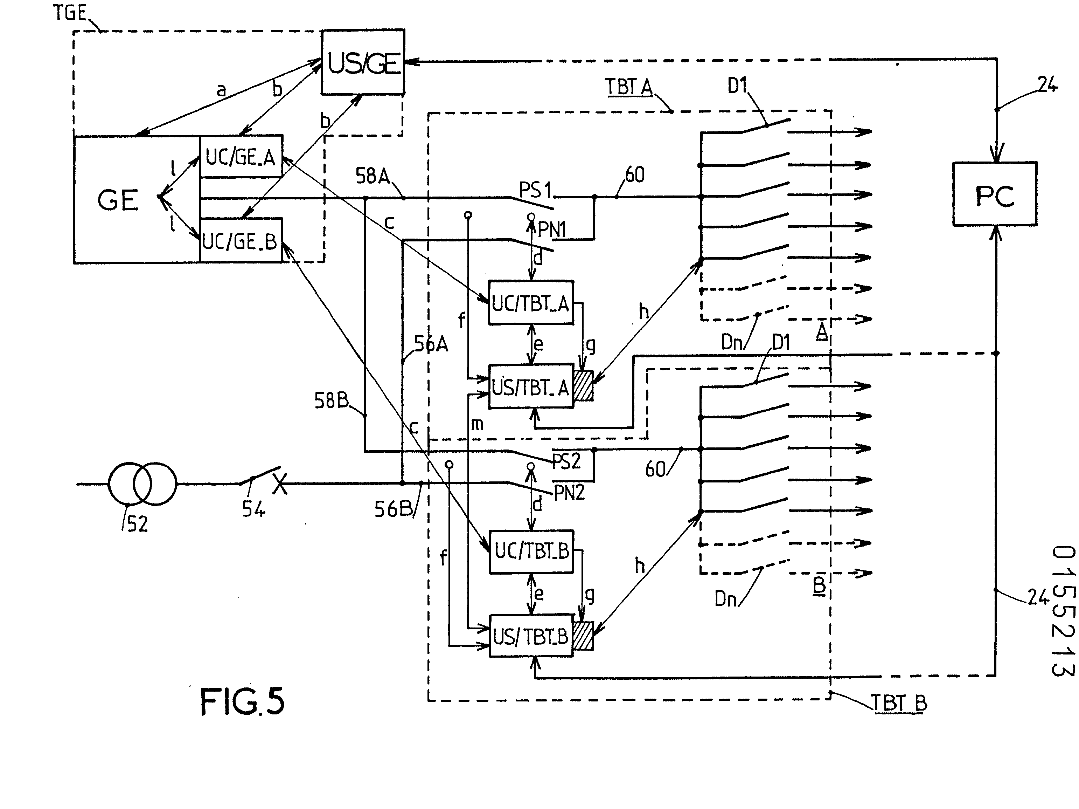

La figure 5 montre une variante de la fig. 4, avec deux tableaux TBT-A et TBT-B identiques en parallèle alimentant deux jeux de barres 60 appartenant à deux groupes A et B de départs. Les mêmes lettres ou numéros de repères sont utilisés pour désigner des éléments identiques. Les deux procédés de la fig. 4 sont remplacés dans cette application par trois procédés. L'architecture de la fig. 5 fait apparaître un groupe électrogène GE coopérant avec deux unités de commande UC/GE-A et UC/GE-B permettant d'obtenir un objectif de disponibilité prédéterminé. La première unité de commande UC/GE-A du tableau TGE est interconnectée par la liaison c avec l'unité de commande UC/TBT-A. La deuxième unité de commande UC/GE-B du tableau TGE est reliée par une autre liaison c à l'unité de commande UC/TBT-B. Une liaison m série asynchrone bidirectionnelle relie les deux unités de surveillance US/TBT-A et US/TBT-B.

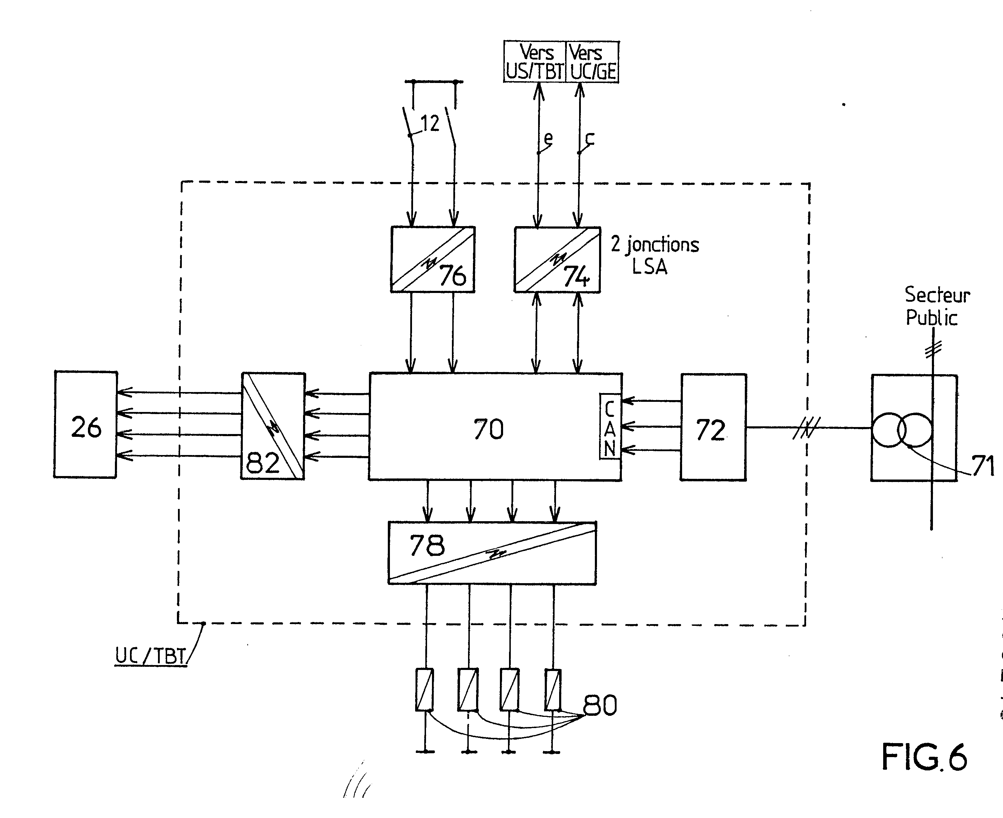

Le schéma synoptique de l'unité de commande UC/TBT des tableaux basse tension utilisée dans les dispositifs des fig. 4 et 5 est représenté à la fig. 6. Le micro-contrôleur 70 intègre une unité centrale, une mémoire RAM et REPROM, un

17

0155213

compteur, un multiplexeur et un convertisseur analogique numérique CAN. Le microcontrôleur 70 est connecté par l'intermédiaire des capteurs de potentiel 71 d'une interface 72 d'entrée de mesure des tensions du secteur public qui assure l'isolement galvanique entre le secteur et le système, l'adaptation du niveau de tension et la conversion alternatif/continu. L'unité de commande UC/TBT comporte de plus :

- deux jonctions 74 à liaisons (e et c) série asynchrone entre le micro-contrôleur 70 et l'unité de surveillance US/TBT d'une part, et l'unité de commande UC/GE d'autre part. Ces deux jonctions autorisent la réception depuis l'US/TBT des ordres d'exploitation, et l'émission vers l'US/TBT des états internes de l'UC:TBT.

- une interface 76 ENTREES TOR logiques reliée à ces capteurs 12.

- une première interface 78 SORTIES logiques pour la commande des bobines 80 du permutateur correspondant PS1, PN1; PS2, PN2.

- une deuxième interface 82 SORTIES logiques reliée à l'interface de sûreté 26 selon l'invention, pour la commande de relestage et de délestage.

Selon le dispositif de la fig. 5, l'indisponibilité simultanée de deux départs prioritaires à cause d'une défaillance du matériel est inférieure à $10^{-6}$, c'est-à-dire moins de 1 heure de panne pour une période de 100 années. Ce dispositif permet de produire et de distribuer l'énergie électrique en cas de disparition du secteur public avec le minimum d'équipements en bon fonctionnement qui peuvent se réduire à :

- groupe de secours GE

- une unité de commande UC/GE du groupe secours et l'unité de commande UC/TBT du tableau basse tension qui lui est associée.

L'invention n'est bien entendu nullement limitée aux modes de mise en oeuvre plus particulièrement décrits et représentés aux dessins annexés, mais elle s'étend bien au contraire à toute variante  restant dans le cadre des équivalences.

0155213

REVENDICATIONS

1. Système informatique à structure multiprocesseur de commande et de contrôle d'un procédé, comprenant une première unité de commande à microprocesseur destinée à envoyer des signaux logiques de commande vers au moins un actionneur, une deuxième unité de surveillance à microprocesseur, et une liaison bidirectionnelle de transmission de données autorisant un dialogue réciproque entre les deux unités, caractérisé par le fait que le fonctionnement des deux unités de commande (UC) et de surveillance (US) est indépendant et que le système (10) comporte de plus une interface de sûreté (26) comprenant un circuit logique (30) combinatoire auquel est injecté un signal logique d'entrée de commande en provenance de la première unité de commande UC ou de la deuxième unité de surveillance US, et des moyens séquentiels de contrôle de l'état de l'actionneur (16, D1 à Dn), qui délivrent au circuit logique (30) soit un ordre de validation, soit un ordre d'inhibition pour autoriser ou interdire respectivement la manoeuvre de l'actionneur (16, D1 à Dn) par l'intermédiaire de l'une des unités de commande (UC) ou de surveillance (US).

2. Système informatique selon la revendication 1, caractérisé par le fait que l'interface de sûreté (26) est raccordée au bus (28) interne de la deuxième unité de surveillance (US), et que les moyens séquentiels de contrôle comprennent une mémoire d'état (ME) dans laquelle est stockée la valeur binaire (bit 1 ou 0) représentative de l'état de l'actionneur, l'écriture et la lecture de la mémoire d'état (ME) s'effectuant par l'intermédiaire du logiciel de l'unité de surveillance (US).

3. Système informatique selon la revendication 2, chaque interface de sûreté servant à commander une pluralité d'actionneurs bistables comprenant chacun une bobine de commande d'un électro-aimant ou d'un relais provoquant un changement d'état de l'actionneur à chaque impulsion d'ex-

0155213

citation appliquée à la bobine, chaque actionneur présentant un premier état actif "EN EXPLOITATION" correspondant par exemple au bit 1 chargée dans la mémoire d'état (ME), et un deuxième état inactif "HORS EXPLOITATION", correspondant au bit 0 affiché dans la mémoire d'état (ME), caractérisé par le fait que l'interface de sûreté (26) comporte une mémoire de commande (MC) adressable coopérant avec la deuxième unité de surveillance (US) pour injecter dans le circuit logique (30) un signal de commande calibré destiné à actionner un actionneur prédéterminé après validation préalable par la sortie correspondante de la mémoire d'état (ME).

4. Système informatique selon la revendication 2 ou 3, caractérisé par le fait que la mémoire d'état (ME) et/ou le circuit logique (30) sont alimentés directement par une source (AL) autonome ou redondante destinée à sauvegarder le contenu de la mémoire d'état (ME) et à conserver l'alimentation du circuit logique (30) en cas de défaillance de l'une des unités (UC) et (US).

5. Système informatique selon la revendication 4, caractérisé par le fait que la source (AL) est constituée par un circuit logique (OU 42) dont l'une des entrées est connectée à l'alimentation de l'unité de surveillance (US) et dont l'autre entrée est reliée à celle de l'unité de commande (UC) au moyen d'un convertisseur continu/continu.

6. Système informatique selon la revendication 3, 4 ou 5, caractérisé par le fait que le circuit logique (30) de l'interface de sûreté (26) comporte une première porte (OU 37) pilotée par le signal de commande calibré de la mémoire de commande (MC) et par le signal logique en provenance de l'unité de commande (UC), et une deuxième porte (ET 36) dont l'une des entrées est connectée à la sortie de la première porte (OU 37) et dont l'autre entrée reçoît l'ordre de validation ou d'inhibition de la mémoire d'état (ME).

7. Système informatique selon l'une des revendications 3 à 6, dans lequel chaque actionneur bistable est formé par un appareil de coupure fonctionnant en télérupteur, caractérisé par le fait que dans l'état actif "EN EXPL.", chaque appareil de coupure (D1, D2, D3, D4) est normalement fermé par l'intermédiaire de la mémoire de commande (MC) de l'unité de surveillance (US), mais peut être néanmoins délesté et relesté par l'unité de commande (UC) grâce à l'ordre de validation délivré par la mémoire d'état (ME) au circuit logique (30), et que dans l'état inactif "HORS EXPL." la mémoire d'état (ME) bloque le circuit logique (30) pour interdire toute manoeuvre de l'appareil (D1 à D4) par l'intermédiaire de l'unité de commande (UC).

8. Système informatique selon la revendication 7, caractérisé par le fait que l'interface de sûreté (26) comporte des moyens séquentiels de vérification de l'état des appareils de coupure (D1 à D4), formés par un registre de lecture (LEC) recevant des informations en provenance de contacts auxiliaires (CAO, CAF, CD) de signalisation, l'accès au registre (LEC) s'opérant au moyen du logiciel de l'unité de surveillance (US).

9. Système informatique selon l'une des revendications 7 ou 8, pour le contrôle d'un poste de distribution d'énergie électrique à courant alternatif utilisant deux sources d'alimentation en redondance séquentielle, la première source étant le réseau normal et la deuxième source comprenant un groupe électrogène de secours, le passage d'une source à l'autre s'effectuant au moyen d'un permutateur normal/secours logé dans un tableau (TBT) à basse tension renfermant un jeu de barres de répartition équipée d'une pluralité de départs utilisateurs protégés par des appareils de coupure (D1 à Dn), caractérisé par le fait que l'unité de commande (UC/TBT) du tableau (TBT) contrôle le fonctionnement du permutateur (PN1, PS1) et le délestage et relestage des appareils (D1 à Dn) par l'intermédiaire de l'interface de sûreté (26), et que le groupe électrogène (GE) est logé dans un tableau (TGE) contrôlé par une unité de commande (UC/GE) associée à une unité de surveillance (US/GE), les deux unités de commande (UC/GE, UC/TBT) des deux tableaux (TGE, TBT) étant reliées entre elles au moyen d'une liaison bidirectionnelle (c) dans laquelle circulent les informations de délestage et de relestage et les demandes d'arrêt et de marche du groupe électrogène (GE).

10. Système informatique selon la revendication 9, pour le contrôle d'un poste à deux tableaux (TBT-A, TBT-B) identiques en parallèle renfermant chacun un permutateur (PS1, PN1; PS2, PN2) et un jeu de barres d'un groupe (A, B) de départs, caractérisé par le fait que le tableau (TGE) du groupe électrogène (GE) est piloté par deux unités de commande (UC/GE-A, UC/GE-B) redondantes reliées chacune par une liaison bidirectionnelle (c) à l'unité de commande (UC/TBT-A, UC/TBT-B) correspondante des deux tableaux basse tension (TBT-A, TBT-B).

0155213

FIG.1

FIG.2

FIG.3

2/5

0155213

FIG.4

3/5

0155213

0155213

FIG.5

PC

TBT B

TBT A

US/GE

TGE

GE

UC/GE.A  UC/GE.B

D1  Dn  A  B

UC/TBT.A  US/TBT.A  UC/TBT.B  US/TBT.B

PS1  PN1  PS2  PN2

58A  56A  58B  56B

24  60  52  54

FIG.6

Vers US/TBT | Vers UC/GE

e    c

12

2 jonctions LSA

76    74

26    82    70    C A N    72    71

Secteur Public

78

80

UC/TBT

5/5

0155213

**0155213**

Numéro de la demande

EP 85 40 0404

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 057 207 (GENERAL ELECTRIC) * Abrégé; page 4, ligne 113 - page 7, ligne 91; figures 1,4,5 * | 1-4 | G 05 B 19/04 |
| | --- | | |
| Y | US-A-4 365 297 (GRISHAM) * En entier * | 1-4 | |
| | ----- | | |

| | DOMAINES TECHNIQUES RECHERCHES (Int. Cl.4) |
|---|---|
| | G 05 B 19 |

Le présent rapport de recherche a été établi pour toutes les revendications

| Lieu de la recherche | Date d'achèvement de la recherche | Examinateur |
|---|---|---|
| LA HAYE | 29-04-1985 | RESSENAAR J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82